# EUROPÄISCHE PATENTANMELDUNG

(11) **EP 4 442 382 A1**
(43) Veröffentlichungstag der Anmeldung: **09.10.2024**
(21) Anmeldenummer: 24166802.9
(22) Anmeldetag: 27.03.2024
(51) Int. Cl.: B21D 5/08, B21C 37/12, B21D 51/18

(54) **FORMEINHEIT ZUR ANORDNUNG IN EINER SPIRAL-BEHÄLTERSCHWEISSANLAGE ZUR HERSTELLUNG VON BEHÄLTERN ZWISCHEN EINER VORRATSROLLE ZUM BEREITSTELLEN EINES BLECHBANDS UND EINER VERBINDUNGSEINHEIT ZUR VERBINDUNG BENACHBARTER BLECHBANDABSCHNITTE**

(30) Priorität: 03.04.2023 DE 102023108501
(71) Anmelder: Lipp & Mayer Technologie GmbH, 74076 Heilbronn (DE)
(72) Erfinder: Lipp, Xaver, verstorben (DE)
(74) Vertreter: Gleim Petri Patent- und Rechtsanwaltspartnerschaft mbB

(57) **Zusammenfassung**

Eine Formeinheit zur Anordnung an einer Spiral-Behälterschweißanlage zur Herstellung von Behältern zwischen einer Vorratsrolle zum Bereitstellen eines Blechbands und einer Verbindungseinheit zur Verbindung benachbarter Blechbandabschnitte (2), welche Formeinheit (10) ein Bearbeitungswerkzeug (3) zum kontinuierlichen Biegen eines Blechbandrandabschnitts (21) umfasst, wobei das Bearbeitungswerkzeug (3) derart ausgebildet ist, um einen in Länge (L) und Biegewinkel (α) variablen Blechbandrandabschnitt (21) zu biegen.

## Beschreibung

Die Erfindung betrifft eine Formeinheit zur Anordnung in einer Spiral-Behälterschweißanlage zur Herstellung von Behältern zwischen einer Vorratsrolle zum Bereitstellen eines Blechbands und einer Verbindungseinheit zur Verbindung benachbarter Blechbandabschnitte sowie eine Spiral-Behälterschweißanlage.

Die Erfindung liegt auf dem technischen Gebiet der Herstellung von Behältern, wie Silos zur Speicherung von Feststoffen, Flüssigkeiten und/oder Gasen. Zum Bespiel können darin Getreide, Holzschnitzel, Bioabfall, Wasser, Abwasser, Klärschlamm, Erdöl oder Erdgas aufbewahrt werden.

Derartige Behälter werden aus einem einlagigen, wendelförmig gebogenem, übereinander durchgehend verlaufend angeordneten, eine zylindrische Ebene bildenden Blechband hergestellt. Dabei werden übereinander benachbart angeordnete Randabschnitte an einer wendelförmig verlaufenden durchgehenden Stoßstelle miteinander dichtend, zum Beispiel über eine Falz oder mittels Schweißnaht, verbunden.

Je nach Behältergröße wird das wendelförmige Blechband entsprechend einem gewünschten Behälterdurchmesser gebogen.

Aus dem Stand der Technik ist dazu insbesondere aus der EP 3 456 660 A1 bekannt, am Aufstellungsort des Behälters eine Biegestation und eine Schweißstation vorzusehen.

Das rohe Blechband wird von einer Vorratsrolle entnommen und vertikal einer Biegestation zugeführt. Das zugeführte Blechband wird in der Biegestation auf eine entsprechend dem Durchmesser des Behälters vorgesehene Krümmung in der Art einer Spirale gebogen.

Das auf diese Weise spiralförmig gekrümmte bzw. gewendelte Blechband wird einer Verbindungstation zugeführt, in der übereinander benachbart angeordnete Randabschnitte des Blechbands miteinander derart verbunden werden, um ein gewünschtes Behältervolumen zu erzeugen. Dazu werden benachbarte Blechabschnitte miteinander, beispielsweise durch eine Falzverbindung oder Schweißverbindung, aneinander gefügt.

Eine vorteilhafte Herstellungsvariante besteht darin, mit einem Schweißgerät kontinuierlich eine Innenschweißnaht herzustellen. Zur Herstellung der Innenschweißnaht wird das spiralförmige Blechband so durch die Verbindungsstation geführt, dass ein oberer Blechbandabschnitt und ein unterer Blechbandabschnitt derart zueinander positioniert geführt werden, um diese von der Behälterinnenseite mittels Schweißnaht zu verbinden.

Es hat sich als vorteilhaft erwiesen, den oberen Randbereich und den unteren Randbereich jeweils zu biegen, um an der Stoßstelle einen Versatz zu erzeugen, der das Anbringen einer Schweißnaht erlaubt, während ein Abfließen des während der Herstellung flüssigen Schweißgutes nach unten zuverlässig verhindert wird. Zur Herstellung dieses Versatzes können vielfältig geformte Biegeabschnitte realisiert werden, wobei eine vorteilhafte Variante vorsieht den oberen Randbereich des unteren Blechabschnitts rechtwinklig abzukanten, damit dieser etwa horizontal liegt und den unteren Randbereich des oberen Blechabschnitts derart abzuwinkeln, dass dieser im in die Schweißvorrichtung eingeführten Zustand auf dem abgekanteten Abschnitt steht.

Problematisch dabei ist, dass das Blechband, insbesondere bei dünner Wandstärke, bei Einprägung des abgekanteten unteren Randabschnitts dazu neigt, im gegenüberliegenden freien Randbereich eine wellige Struktur einzunehmen, die den anschließenden Schweißprozess und damit die resultierende Behälterform negativ beeinflussen kann. Dies kann insbesondere dazu führen, dass im Verlauf der kontinuierlichen Herstellung der Schweißnaht die Behälterwand aus der geplanten Form läuft.

Es ist die Aufgabe der Erfindung eine Formeinheit zur Anordnung in einer Spiral-Behälterschweißanlage zur Herstellung von Behältern zwischen einer Vorratsrolle zum Bereitstellen eines Blechbands und einer Verbindungseinheit zur Verbindung benachbarter Blechbandabschnitte zur Verfügung zu stellen, die die Nachteile im Stand der Technik überwindet und mit der insbesondere bei der kontinuierlichen Herstellung der Schweißnaht gewährleistet ist, dass die erzeugte Behälterwand der geplanten Form entspricht.

Diese Aufgabe wird durch eine Formeinheit zur Anordnung in einer Spiral-Behälterschweißanlage zur Herstellung von Behältern zwischen einer Vorratsrolle zum Bereitstellen eines Blechbands und einer Verbindungseinheit zur Verbindung benachbarter Blechbandabschnitte gemäß dem jeweiligen unabhängigen Anspruch gelöst. Vorteilhafte Ausgestaltungen bilden den Gegenstand der abhängigen Ansprüche.

Die Erfindung umfasst eine Formeinheit zur Anordnung in einer Spiral-Behälterschweißanlage zur Herstellung von Behältern zwischen einer Vorratsrolle zum Bereitstellen eines Blechbands und einer Verbindungseinheit zur Verbindung benachbarter Blechbandabschnitte, welche ein Bearbeitungswerkzeug zum kontinuierlichen Biegen eines Blechbandrandabschnitts umfasst. Dabei ist das Bearbeitungswerkzeug derart ausgebildet, sodass sich ein in Länge und Biegewinkel variabler Blechbandrandabschnitt biegen lässt. Indem ein in Länge und Biegewinkel variabler Blechbandrandabschnitt erzeugt wird, kann der der Verbindungseinheit zugeführte Blechbandabschnitt kontinuierlich geformt zugeführt werden. Die kontinuierliche Formung erlaubt es während der Herstellung der Schweißnaht auf ungewünschte Änderungen der Form des Blechbands zu reagieren, damit die erzeugte Behälterwand der geplanten Form entspricht. Dabei kann besonders einfach der untere Blechbandrandabschnitt des oberen Blechbandabschnitt kontinuierlich geformt werden.

Bevorzugt ist das Bearbeitungswerkzeug derart ausgebildet, um einen in Länge und Biegewinkel variablen geraden Blechbandrandabschnitt zu biegen. Indem die Länge und der Biegewinkel angepasst werden, kann die Positionierung der übereinander benachbart angeordneten Randabschnitte relativ zueinander angepasst werden, um zum Beispiel den Behälterdurchmesser zu korrigieren.

Gemäß eines weiteren vorteilhaften Aspekts umfasst das Bearbeitungswerkzeug dabei eine in Richtung einer Drehachse verschiebbare Formwalze. Indem die Formwalze entlang der Richtung der Drehachse verschoben wird, kann der Abstand benachbarter Blechbandabschnitte variiert werden.

Ferner bevorzugt umfasst das Bearbeitungswerkzeug eine in Richtung einer Drehachse verschiebbare Gegendruckwalze. Die Position der Gegendruckwalze kann dabei parallel zur Anpassung der Position der Formwalze geändert werden.

Vorteilhafterweise sind die Formwalze und die Gegendruckwalze an einer Halteeinheit angeordnet. Diese gemeinsame Anordnung erlaubt, dass sie gemeinsam in Richtung der Drehachse (X-X, Y-Y) verstellt werden können, um zu gewährleisten, dass das Blechband nicht verrutscht und beschädigt wird.

Dabei umfasst die Halteeinheit gemäß einer vorteilhaften Variante eine erste Welle zur drehbaren Anordnung der Formwalze und eine zweite Welle zur drehbaren Anordnung der Gegendruckwalze. Die erste Welle und die zweite Welle sind parallel zwischen einer Lagerplatte und einer Gegenlagerplatte angeordnet.

Bevorzugt lässt sich durch Betätigung einer ersten Stelleinheit die Lagerplatte in Richtung der Gegenlagerplatte verstellen. Dabei weist die Gegenlagerplatte zwei Öffnungen auf, durch die die erste Welle und die zweite Welle drehbar in axialer Richtung verstellbar geführt werden. Indem die Lagerplatte verstellt wird, lassen sich Formwalze und Gegendruckwalze gemeinsam parallel verstellen. Vorteilhafterweise umfasst die Lagerplatte eine zweite Stelleinheit, um bei einer Betätigung der zweiten Stelleinheit die erste Welle in einer Richtung rechtwinklig zur Drehachse (X-X) zu verstellen. So lässt sich bei Betätigung der zweiten Stelleinheit die erste Welle in einer Richtung rechtwinklig zur Drehachse (X-X), zum Beispiel zu Anpassung an Dicke des Blechs, verstellen.

Weiterhin umfasst die Formwalze einen zylindrischen Walzenabschnitt und einen konischen Walzenabschnitt. Der konische Walzenabschnitt führt bei der Anlage des Blechbands zum Verbiegen des Randbereichs.

Vorteilhafterweise ist der konische Walzenabschnitt dabei lösbar an der ersten Welle befestigt. Dies erlaubt den Einsatz verschiedener konischer Walzenabschnitte je nach gewünschtem Biegewinkel.

Ein weiterer Aspekt der Erfindung betrifft eine Spiral-Behälterschweißanlage zur Herstellung von Behältern aus benachbarten Blechbandabschnitten umfassend eine Formeinheit wie insbesondere voran beschrieben.

Im Folgenden wird die Erfindung anhand der Figuren näher erläutert. Die Bezugszeichen werden in allen Figuren gleich verwendet.

Es zeigen:
- Fig. 1: eine Darstellung des Bearbeitungswerkzeugs zum kontinuierlichen Biegen eines Blechbandrandabschnitts;
- Fig. 2: eine teilweise Schnittansicht des Bearbeitungswerkzeugs aus Fig. 1 mit Blech von vorne;
- Fig. 3: Vergleich von unterschiedlichen Stellungen des Bearbeitungswerkzeugs aus Fig. 1; und
- Fig. 4: schematische Darstellung eines Ausführungsbeispiels einer Formeinheit mit Bearbeitungswerkzeug.

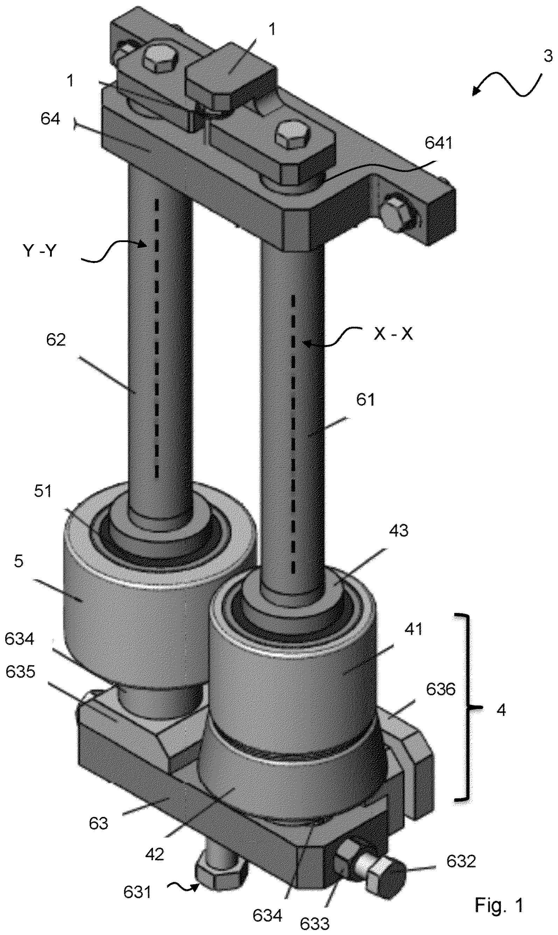

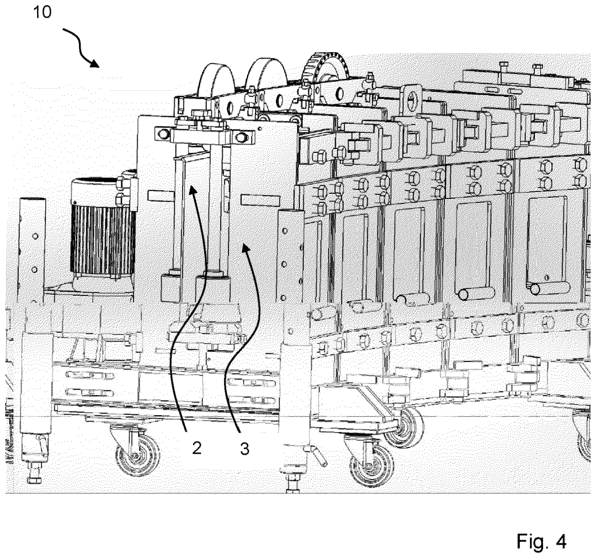

Die **Fig. 1** zeigt ein Bearbeitungswerkzeug 3 gemäß einem Ausführungsbeispiel der Erfindung. Dieses Bearbeitungswerkzeug 3 ist in einer Formeinheit einer Spiral-Behälterschweißanlage (vgl. Fig. 4) angeordnet. Die Formeinheit kann in einer Spiral-Behälterschweißanlage zur Herstellung von Behältern zwischen einer Vorratsrolle zum Bereitstellen eines Blechbands und einer Verbindungseinheit zur Verbindung benachbarter Blechbandabschnitte angeordnet werden.

Das Bearbeitungswerkzeug umfasst eine Formwalze 4 und eine Gegendruckwalze 5, welche sich aus einen zylindrischen Walzenabschnitt 41 und einen lösbaren konischen Walzenabschnitt 42 zusammensetzt. Formwalze 4 und Gegendruckwalze 5 sind jeweils über ein Kugellager 51 und einen Haltering 43 am Bearbeitungswerkzeug 3 gehalten. Dabei sitzt die Formwalze 4 auf einer ersten Welle 61 und die Gegendruckwalze 5 auf einer zweiten Welle 62. Die zweite Welle 62 ist parallel zur ersten Welle 61 angeordnet. Dies ermöglicht eine Drehung der Walze 4 bzw. 5 um die Drehachsen X-X bzw. Y-Y. Die Walzen 4 und 5 sind außerdem entlang der Drehachse X-X bzw. Y-Y verschiebbar.

Die erste und die zweite Welle 61 und 62 sind in einer Halterung 6 eingefasst, welche eine Lagerplatte 63 und eine dazu parallel angeordnete Gegenlagerplatte 64 umfasst. Dabei werden die Wellen 61 und 62 durch zwei Öffnungen 641 in der Gegenlagerplatte drehbar in axialer Richtung verstellbar geführt.

Die Lagerplatte 63 weist eine erste Stelleinheit 631 in der Form einer Schraube auf. Ein Drehen dieser Schraube führt zur Bewegung der Lagerplatte 63 in Richtung der Gegenlagerplatte 64. Eine zweite Stelleinheit 632 in der Form einer Schraube ermöglicht die Bewegung der ersten Welle 61 in einer Richtung senkrecht zur Drehachse X-X auf die zweite Welle 22 zu bzw. von dieser weg. Die zweite Stelleinheit 632 umfasst ferner eine Kontermutter 633 zum Feststellen der Stellposition. Die Lagerplatte 63 umfasst zwei Ringaufnahmen 634 für die erste und die zweite Welle 61 und 62. Die Ringaufnahmen 634 der zweiten Welle sitzen auf einer separaten Lagerplattenelement 635. Die Lagerplatte 63 umfasst rückseitig eine Befestigungsplatte 636.

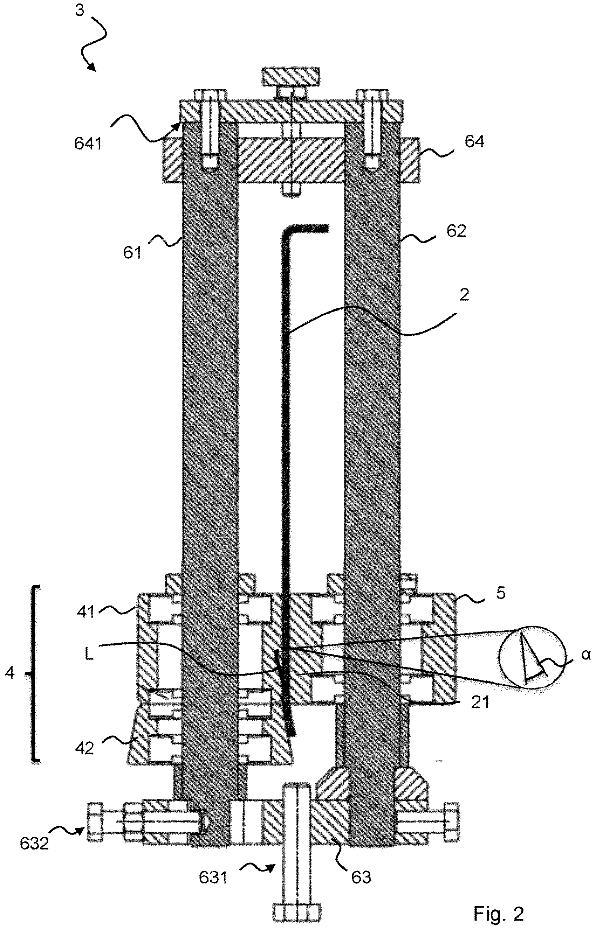

Wird wie in **Fig. 2** der Blechbandabschnitt 2 vertikal in das Bearbeitungswerkzeug 3 eingeführt, kommt es zur Biegung des unteren Rands des Blechbandrandabschnitts 21 durch den konischen Walzenabschnitt 42.

Die kontinuierliche Formung des Blechbandrandabschnitts 21 erlaubt es während der Herstellung der Schweißnaht auf ungewünschte Änderungen der Form des Blechbands zu reagieren, damit die erzeugte Behälterwand der geplanten Form entspricht. Zum Beispiel kann durch Austauschen der konischen Formwalze 42 der Winkel α des Blechbandrandabschnitts 21 angepasst werden. In dieser Darstellung wurde der Winkel im Kreis seitlich der Figur verdeutlicht. Die Länge L wurde mittels Klammer dargestellt. Dazu ist der konische Walzenabschnitt 42 lösbar an der ersten Welle 61 befestigt. Der Winkel α kann durch die Wahl der Form des konischen Walzenabschnitts 42 angepasst werden.

Die Länge L des Blechbandrandabschnittes 21 lässt sich variieren, indem die Formwalze 4 und die Gegendruckwalze 5 vertikal verschoben werden. Wie bereits im Zusammenhang mit Fig. 1 beschrieben, sind die Formwalze 4 und die Gegendruckwalze 5 derart an einer Halteeinheit 6 angeordnet, um gemeinsam in Richtung der Drehachse vertikal verstellt zu werden. Dazu umfasst die Halteeinheit 6 eine erste Welle 61 zur drehbaren Anordnung der Formwalze 4 und parallel dazu eine zweite Welle 62 zur drehbaren Anordnung der Gegendruckwalze 5. Die Lagerplatte 63 der Halteeinheit 6 hat eine erste Stelleinheit 631, um bei einer Betätigung der ersten Stelleinheit 631 die Lagerplatte 63 in Richtung der Gegenlagerplatte 64 zu verstellen. Die Gegenlagerplatte 64 hat zwei Öffnungen 641, durch die die erste Welle 61 und die zweite Welle 62 drehbar in axialer Richtung verstellbar geführt werden.

Wie im gezeigten Schnitt zu sehen, umfasst die Lagerplatte 63 eine zweite Stelleinheit 632, um bei einer Betätigung der zweiten Stelleinheit 632 die erste Welle 61 in einer Richtung rechtwinklig zur vertikalen Drehachse zu verstellen.

Durch die Betätigung der zweiten Stelleinheit 632 kann das Bearbeitungswerkzeug 3 wie in der Figur ersichtlich an die Dicke des

Blechbandabschnittes 2 angepasst werden. Durch die erste Stelleinheit 631 wird das Bearbeitungswerkzeug 3 an die Höhe des Blechbandabschnittes 2 angepasst.

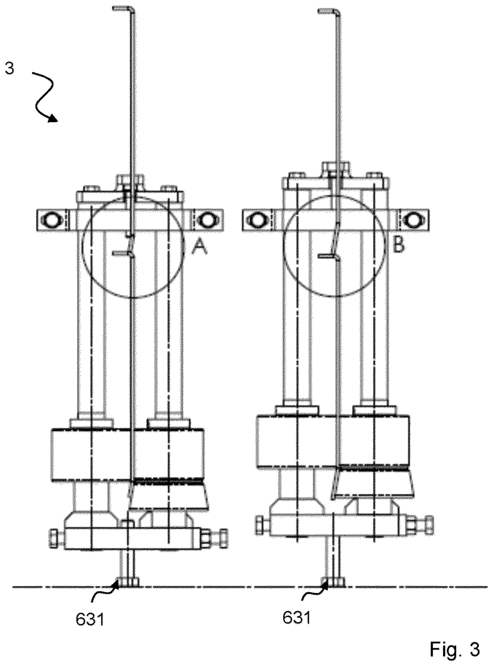

Wie in **Fig. 3** zu sehen, ergeben sich aus zwei verschiedenen Stellungen der ersten Stelleinheit 3 unterschiedliche Längen L des Blechbandrandabschnittes 21, indem die Formwalze 4 und die Gegendruckwalze 5 in der Halteeinheit 6 vertikal verschoben werden.

In **Fig. 4** ist eine Formeinheit 10 zur Anordnung an einer Spiral-Behälterschweißanlage (nicht dargestellt) zur Herstellung von Behältern zwischen einer Vorratsrolle zum Bereitstellen eines Blechbands 2 und einer Verbindungseinheit (Schweißgerät) zur Verbindung benachbarter Blechbandabschnitte 2 dargestellt.

Die dargestellte Formeinheit 10 umfasst ein Bearbeitungswerkzeug 3 zum kontinuierlichen Biegen eines Blechbandrandabschnitts des darin geführten Blechbands 2.

## Patentansprüche

1. Formeinheit (10) zur Anordnung an einer Spiral-Behälterschweißanlage zur Herstellung von Behältern zwischen einer Vorratsrolle zum Bereitstellen eines Blechbands und einer Verbindungseinheit zur Verbindung benachbarter Blechbandabschnitte (2), welche Formeinheit (10) ein Bearbeitungswerkzeug (3) zum kontinuierlichen Biegen eines Blechbandrandabschnitts (21) umfasst, wobei das Bearbeitungswerkzeug (3) derart ausgebildet ist, um einen in Länge (L) und Biegewinkel (α) variablen Blechbandrandabschnitt (21) zu biegen.

2. Formeinheit (10) nach Anspruch 1, wobei das Bearbeitungswerkzeug (3) derart ausgebildet ist, um einen in Länge (L) und Biegewinkel (α) variablen geraden Blechbandrandabschnitt (21) zu biegen.

3. Formeinheit (10) nach Anspruch 1 oder 2, wobei das Bearbeitungswerkzeug (3) eine in Richtung einer Drehachse (X-X) verschiebbare Formwalze (4) umfasst.

4. Formeinheit (10) nach einem der Ansprüche 1 bis 3, wobei das Bearbeitungswerkzeug (3) eine in Richtung einer Drehachse (Y-Y) verschiebbare Gegendruckwalze (5) umfasst.

5. Formeinheit (10) nach Anspruch 3 und 4, wobei die Formwalze (4) und die Gegendruckwalze (5) derart an einer Halteeinheit (6) angeordnet sind, um gemeinsam in Richtung der Drehachse (X-X, Y-Y) verstellt zu werden.

6. Formeinheit (10) nach Anspruch 5, wobei die Halteeinheit (6) eine erste Welle (61) zur drehbaren Anordnung der Formwalze (4) und eine zweite Welle (62) zur drehbaren Anordnung der Gegendruckwalze (5) umfasst, und wobei die erste Welle (61) und die zweite Welle (62) parallel zwischen einer Lagerplatte (63) und einer Gegenlagerplatte (64) angeordnet sind.

7. Formeinheit nach Anspruch 6, wobei die Lagerplatte (63) eine erste Stelleinheit (631) umfasst, um bei einer Betätigung der ersten Stelleinheit (631) die Lagerplatte (63) in Richtung der Gegenlagerplatte (64) zu verstellen, und wobei die Gegenlagerplatte (64) zwei Öffnungen (641) umfasst, durch die die erste Welle (61) und die zweite Welle (62) drehbar in axialer Richtung verstellbar geführt werden.

8. Formeinheit (10) nach Anspruch 6 oder 7, wobei die Lagerplatte (63) eine zweite Stelleinheit (632) umfasst, um bei einer Betätigung der zweiten Stelleinheit (631) die erste Welle (61) in einer Richtung rechtwinklig zur Drehachse (X-X) zu verstellen.

9. Formeinheit (10) nach einem der Ansprüche 3 bis 8, wobei die Formwalze (4) einen zylindrischen Walzenabschnitt (41) und einen konischen Walzenabschnitt (42) umfasst.

10. Formeinheit (10) nach einem der Ansprüche 3 bis 8, wobei der konische Walzenabschnitt (42) lösbar an der ersten Welle befestigt ist.

11. Spiral-Behälterschweißanlage zur Herstellung von Behältern aus benachbarten Blechbandabschnitten (3) umfassend eine Formeinheit (10) nach einem der vorangehenden Ansprüche.
